# DEMANDE DE BREVET EUROPEEN

(11) **EP 4 831 092 A1**
(43) Date de publication de la demande: **28.10.2026**
(21) Numéro de dépôt: 26174095.5
(22) Date de dépôt: 22.04.2026
(51) Int. Cl.: B65G 17/12, B65G 1/137, B65G 17/18, B65G 47/57, E04H 3/04

(54) **INSTALLATION DE SERVICE AU VOLANT, ET PROCÉDÉ MIS EN OEUVRE DANS UNE TELLE INSTALLATION**

(30) Priorité: 25.04.2025 FR 2504400
(71) Demandeur: Exotec Product France, 59290 Wasquehal (FR)
(72) Inventeur: MOULIN, Romain, 59800 LILLE (FR)
(74) Mandataire: Plasseraud IP

(57) **Abrégé**

La présente divulgation est relative à un système de remise de commande (1) sur un emplacement de prélèvement (2) situé à l'extérieur d'un bâtiment de stockage (3) comprenant un convoyeur continu (4) s'étendant depuis l'intérieur du bâtiment jusqu'au niveau dudit emplacement de prélèvement, s'étendant au travers d'un tunnel souterrain.

## Description

La présente divulgation est relative à un système de remise de commandes sur un emplacement de prélèvement situé à l'extérieur d'un bâtiment de stockage. Le système comprend un convoyeur continu s'étendant depuis l'intérieur du bâtiment jusqu'au niveau dudit emplacement de prélèvement.

La présente divulgation est encore relative à un procédé de remise de commandes mis en oeuvre dans un système.

### Domaine technique

La présente divulgation relève du domaine des systèmes de remise de commandes, c'est-à-dire des installations et équipements logistiques trouvant une application dans le commerce, plus particulièrement dans un « drive » (de l'anglais « *drive-through* »), parfois appelé « service au volant » en français ; le service au volant est un service permettant à un consommateur ou client d'être servi en restant dans sa voiture, ou à tout le moins en restant proche de cette dernière.

Un tel système de remise de commandes présente un bâtiment de stockage à l'intérieur duquel sont stockés des articles, un ensemble de places de stationnement pour les clients jouxtant le bâtiment de stockage, et des voies de circulation pour véhicules automobiles, typiquement une ou plusieurs voies d'accès aux places de stationnement permettant d'accéder aux places pour prélever les commandes, et une ou plusieurs voies permettant auxdits véhicules d'évacuer les places de stationnement une fois les commandes prélevées.

En conséquence, les places de stationnement sont classiquement situées à distance du bâtiment de stockage, au moins une voie de circulation intermédiaire s'étendant entre les places de stationnement et le bâtiment de stockage. Cette configuration, bien que fonctionnelle, introduit plusieurs contraintes : elle allonge le temps nécessaire pour l'acheminement des commandes jusqu'aux clients, accroît la complexité des flux logistiques, et expose les opérateurs aux risques liés aux traversées fréquentes des voies de circulation automobile.

Dans un tel système de remise de commandes, des opérateurs effectuent ainsi des allers-retours entre le bâtiment de stockage et les places de stationnement, en poussant des chariots remplis des articles des différentes commandes, pour acheminer lesdits articles jusqu'au véhicule stationné. Chaque aller-retour impose aux opérateurs de traverser la voie de circulation intermédiaire, ce qui n'est pas idéal du point de vue de la fluidité logistique. Cela génère non seulement une perte de temps et une fatigue physique accrue pour les opérateurs, mais aussi des risques d'accidents, notamment en cas de circulation dense ou de mauvaise visibilité. De plus, cela limite la cadence de préparation et de remise des commandes, et donc la capacité globale du site.

### Technique antérieure

On connaît toutefois de la présente demanderesse, en particulier du document FR3.100.237A1, un système de remise automatique de commandes sur un emplacement de prélèvement à l'extérieur d'un bâtiment, comprenant un module de transport monté en hauteur, présentant une piste et des organes de suspension tels que des crochets déplaçables le long de ladite piste. Ces crochets peuvent être configurés pour suspendre des poches adaptées pour recevoir un sac d'articles, comme divulgué par FR3.100.237A1.

Les poches (ou sacs d'articles) sont déplacées automatiquement, depuis l'intérieur du bâtiment contenant les articles pour la préparation de commandes, jusqu'à l'emplacement de prélèvement, via un tunnel enveloppant une portion de la piste s'étendant à l'extérieur du bâtiment, au-dessus d'une voie de circulation pour véhicule automobile.

Une telle solution de convoyage automatisée représente un progrès notable par rapport à l'état de la technique nécessitant des déplacements manuels incessants. Elle améliore l'ergonomie pour les opérateurs, réduit les risques d'accident, accélère les flux logistiques, et améliore ainsi l'efficacité globale du service de remise de commande.

Toutefois, selon les constatations de l'inventeur, un tel système de remise de commande automatisé n'est pas exempt de défauts importants. En particulier, l'intégration d'un tunnel extérieur surplombant la voie de circulation pose plusieurs problèmes majeurs. D'une part, sa réalisation est techniquement complexe : elle nécessite des infrastructures lourdes, une précision accrue pour la pose de la piste et des organes de suspension, ainsi que des coûts de construction élevés. D'autre part, l'implantation de tels tunnels est souvent confrontée à des obstacles réglementaires : obtenir les autorisations administratives, notamment les permis de construire, peut s'avérer difficile, voire impossible selon les juridictions locales. Ce processus peut entraîner des retards significatifs, augmenter les coûts de projet, et compromettre la rentabilité de l'installation. De surcroît, l'ajout de structures aériennes au-dessus de voies de circulation peut susciter des inquiétudes en matière de sécurité publique et compliquer l'assurance du site.

### Résumé

La présente divulgation vient améliorer la situation.

Il est proposé un système de remise de commandes sur un emplacement de prélèvement situé à l'extérieur d'un bâtiment de stockage comprenant un convoyeur continu s'étendant depuis l'intérieur du bâtiment jusqu'au niveau dudit emplacement de prélèvement.

Selon la présente divulgation ledit convoyeur continu présente :
- au moins une boucle de transmission,
- au moins un support d'articles entrainé par ladite au moins un boucle de transmission,

et dans lequel un tunnel souterrain s'étend depuis l'intérieur du bâtiment de stockage jusqu'à l'extérieur du bâtiment au travers présentant :
   - une cheminée interne débouchant à l'intérieur du bâtiment au travers de laquelle s'étend une première section d'extrémité du convoyeur continu formant un descenseur qui ressort à l'intérieur du bâtiment,
   - une cheminée externe à l'extérieur du bâtiment débouchant au niveau dudit emplacement de prélèvement au travers de laquelle s'étend une deuxième section extrémité du convoyeur continu formant un ascenseur qui ressort à l'extérieur du bâtiment au niveau dudit emplacement de prélèvement,
   - un passage souterrain, intermédiaire, s'étendant au moins suivant une composante horizontale mettant en communication la cheminée interne et la cheminée externe, au travers duquel s'étend une section intermédiaire du convoyeur continu configuré pour le transport horizontal dudit au moins un support d'article depuis le descenseur jusqu'audit ascenseur
et dans lequel le convoyeur continu présente un mécanisme de contrôle de l'orientation dudit au moins un support d'articles par rapport à ladite au moins une boucle transmission, comprenant un axe de rotation entre ledit au moins support d'articles et la boucle de transmission, configuré pour maintenir une surface de support selon une orientation horizontale.

Les caractéristiques exposées dans les paragraphes suivants peuvent, optionnellement, être mises en œuvre, indépendamment les unes des autres ou en combinaison les unes avec les autres :

Selon un mode de réalisation, le mécanisme de contrôle dudit au moins un support par rapport à ladite au moins boucle transmission peut présenter
- un système de cames présentant plusieurs cames s'étendant le long des différentes sections du convoyeur continu consistant en la première section extrémité, la section intermédiaire et la deuxième section d'extrémité du convoyeur continu,
- un système de suiveur de cames appartenant audit au moins un support articles configuré pour engager avec lesdites cames lors du cheminement dudit au moins un support d'articles le long des différentes sections du convoyeur continu consistant en la première d'extrémité, la section intermédiaire et la deuxième section d'extrémité.

Selon un mode de réalisation le système de suiveurs de cames présente:
a) une première paire de roues de guidage, orientées suivant une première direction horizontale et
b) une deuxième paire de roues de guidage orientées suivant une direction verticale et dans lequel le système de came présente:
c) des premiers guides présentant des guides horizontaux rectilignes s'étendant en longueur le long de la section intermédiaire du convoyeur continu, les guides horizontaux configurés pour coopérer avec les roues de guidage de la première paire pour assurer l'orientation horizontale dudit au moins un support lors de son cheminement au travers de la section intermédiaire du convoyeur continu
d) des deuxièmes guides présentant des guides verticaux rectilignes s'étendant en longueur suivant la hauteur le long de la première section d'extrémité et le long de la deuxième section d'extrémité configurés pour coopérer avec les roues de la deuxième paire pour assurer l'orientation horizontale dudit au moins un support d'articles lors de son cheminement à la descente dans la cheminée interne, et de son cheminement à la montée dans la cheminée externe.

En particulier les premiers guides et/ou les deuxième guides présentent des guides incurvés agencés au niveau des zones de transition de ladite au moins une boucle transmission entre:
- la première section d'extrémité formant le descenseur, d'une part, et la section intermédiaire du convoyeur continu,
- la section intermédiaire dudit convoyeur continu, d'une part, et la deuxième section d'extrémité formant ledit ascenseur,
les guides incurvées configurés pour assurer une transition du guidage entre:
- une première configuration par la coopération de le première paire de roues de guidage et les premiers guides lors du cheminement horizontal dudit au moins support
- une deuxième configuration par la coopération de la deuxième paire de roues de guidage et les deuxièmes guides lors du cheminement vertical dudit au moins un support d'articles.

Selon un mode de réalisation, le support d'article présente une surface de support d'articles pour une unité de stockage, ladite surface de support agencée en dessous du niveau de l'axe de rotation, la portion du support formant la surface de support reliée à l'axe de rotation par l'intermédiaire d'au moins une liaison à composante verticale dudit support, l'ensemble support d'article et unité de stockage en appui sur le support présentant un centre de gravité agencé sous le niveau de l'axe de rotation, à l'aplomb de ce dernier, le mécanisme de contrôle dudit au moins un support par rapport à la boucle transmission configuré pour maintenir la surface de support à l'horizontale par l'action de la gravité sur ledit ensemble support d'articles et unité de stockage.

Selon un mode de réalisation, le support d'articles présente un peigne présentant plusieurs dents parallèles en elles, et dans lequel :
- la première section d'extrémité présente une zone d'inversion du sens de déplacement avant laquelle le support d'articles est entrainé à la montée,

un système de transfert comprenant un peigne fixe ,
et dans lequel le support d'articles est configuré pour prélever les articles sur le peigne fixe lorsque les dents du support d'articles traversent les dents du peigne fixe, lors sa montée avant le passage de la zone d'inversion.
   et/ou
   - la deuxième section d'extrémité présente une zone d'inversion du sens de déplacement après laquelle le support d'articles est entrainé à la descente,
un système de transfert comprenant une peigne fixe,
et dans lequel le support d'articles est configuré pour déposer les articles sur le peigne fixe lorsque les dents du support d'articles traversent les dents du peignes fixe, lors sa descente après passage de la zone d'inversion.

Le système de remise de commandes peut être un système de retrait automobile, ou drive comportant une ou plusieurs places de stationnement agencées au niveau dudit emplacement de prélèvement.

Le système de remise de commandes peut présenter une voie de circulation automobile, en communication avec la ou les places de stationnement, le convoyeur continu passant en souterrain sous ladite voie de circulation.

Selon un mode de réalisation, ladite au moins une boucle de transmission comprend une première boucle et une deuxième boucle, parallèles et synchronisées.

Selon un second aspect, la présente divulgation concerne un procédé de remise de commande mettant en œuvre un système de remise de commande selon la présente divulgation comprenant :
- préparer une commande d'articles dans le bâtiment de stockage et disposer les articles dans une ou plusieurs unités de stockage,
- déposer le ou les unités de stockage sur ledit au moins un support d'articles, et transférer le ou lesdites unités de stockage, depuis le bâtiment de stockage jusqu'audit emplacement de prélèvement extérieur, par le convoyage dudit au moins un support d'articles entrainé par ladite au moins une boucle de transmission qui opère successivement une descente dans la cheminée interne, un déplacement horizontal au travers du passage intermédiaire du tunnel et une montée dans la cheminée externe.

### Brève description des dessins

D'autres caractéristiques, détails et avantages apparaîtront à la lecture de la description détaillée ci-après, et à l'analyse des dessins annexés, sur lesquels :
Fig. 1

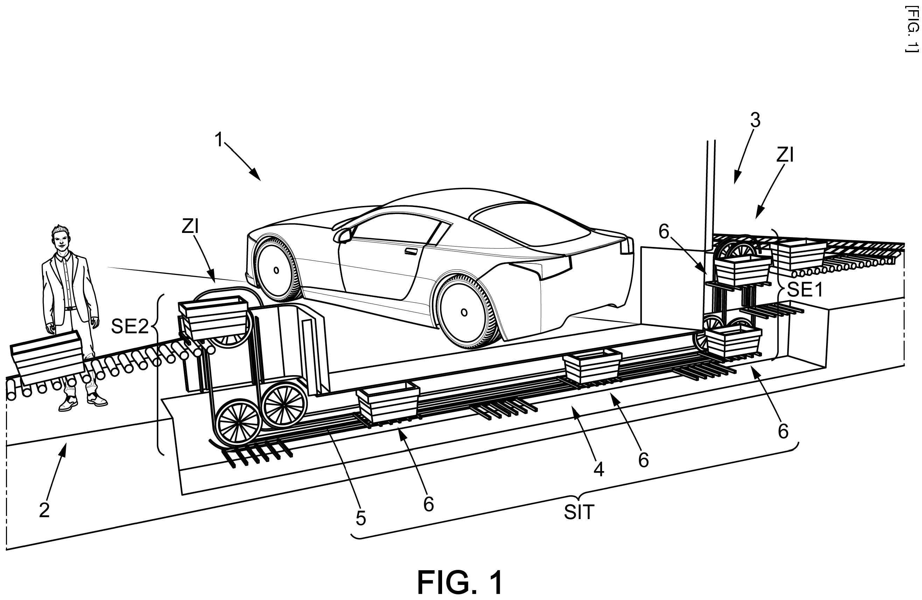

   [Fig. 1] est une vue de coupe d'un système de remise de commandes selon la présente divulgation, illustrant le bâtiment de stockage, un emplacement de prélèvement d'une commande, et un convoyeur continu s'étendant depuis le bâtiment de stockage jusqu'au niveau dudit emplacement de prélèvement en passant en souterrain sous une voie de circulation pour un véhicule automobile, la voie agencée intermédiaire entre le bâtiment de stockage et ledit emplacement de prélèvement, le convoyeur continu, selon un mode de réalisation, utilisant des cames et suiveurs de came pour contrôler les orientations horizontales de supports d'articles le long de différentes sections de longueur du convoyeur consistant en :
   - une première section d'extrémité à fonction de descendeur s'étendant dans une cheminée interne au bâtiment,
   - une section intermédiaire à composante horizontale passant sous la voie de circulation,
   - et une deuxième section d'extrémité à fonction d'ascenseur situé à l'extérieur du bâtiment de stockage.
**Fig. 2**

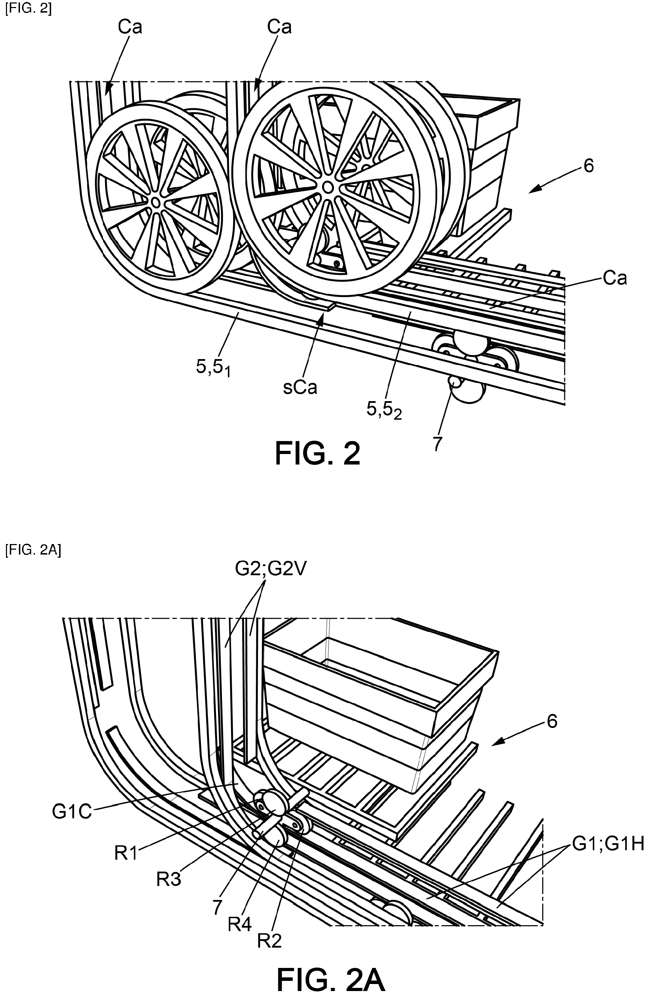

   [Fig. 2] est une vue de détail d'une portion du convoyeur continu du système de la figure 1, illustrant la zone de transition entre deux sections du convoyeur consistant en la section intermédiaire et la deuxième section d'extrémité du convoyeur continu à fonction d'ascenseur, ainsi que ladite au moins une boucle de transmission qui présente une première boucle et une deuxième boucle en parallèle, guidées par des poulies de guidage/d'entrainement ou similaire (par exemple des roues dentées) à fonction de renvoi d'angle entre les deux sections.
**Fig. 2A**
   [Fig. 2A] est une vue selon la figure 2, les roues de guidage omises pour découvrir le système suiveur de cames qui présente une première paire de roues de guidage, orientée horizontalement et une deuxième paire de roues de guidage, orientée verticalement, et dans lequel les cames présentent :
   - des premiers guides présentant des guides horizontaux rectilignes s'étendant en longueur le long de la section intermédiaire du convoyeur continu, les guides horizontaux configurés pour coopérer avec les roues de guidage de la première paire pour assurer l'orientation horizontale dudit au moins un support lors de son cheminement au travers de la section intermédiaire du convoyeur continu
   - des deuxièmes guides présentant des guides verticaux rectilignes s'étendant en longueur suivant la hauteur et le long de la deuxième section d'extrémité, configurés pour coopérer avec les roues de la deuxième paire pour assurer l'orientation horizontale dudit au moins un support d'articles lors de son cheminement à la montée dans la cheminée externe.
**Fig. 3**

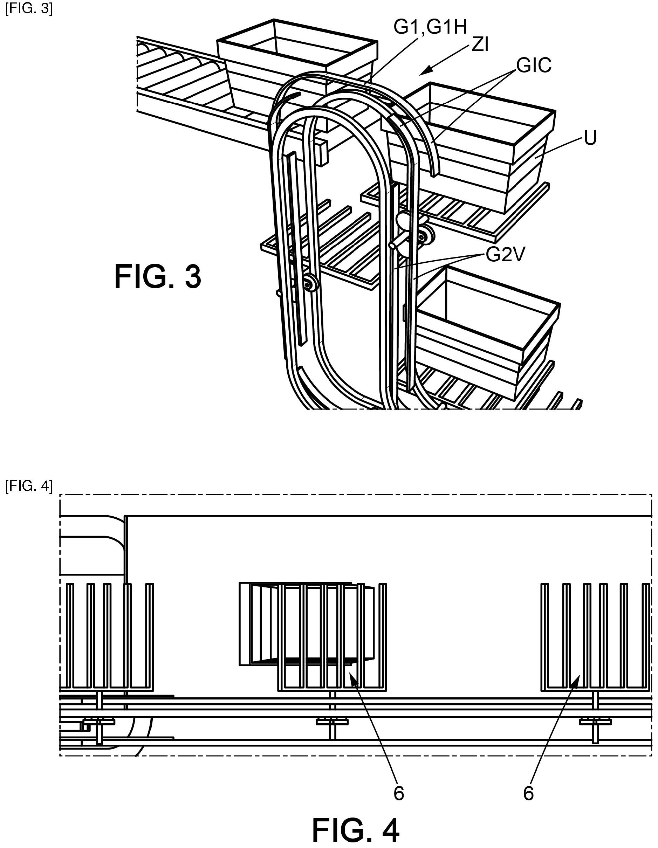

   [Fig. 3] est une vue de détail de la deuxième section d'extrémité à fonction d'ascenseur.
**Fig. 4**
   [Fig. 4] est une vue de dessous de la section intermédiaire du convoyeur continu de la figure 1.
**Fig. 5**

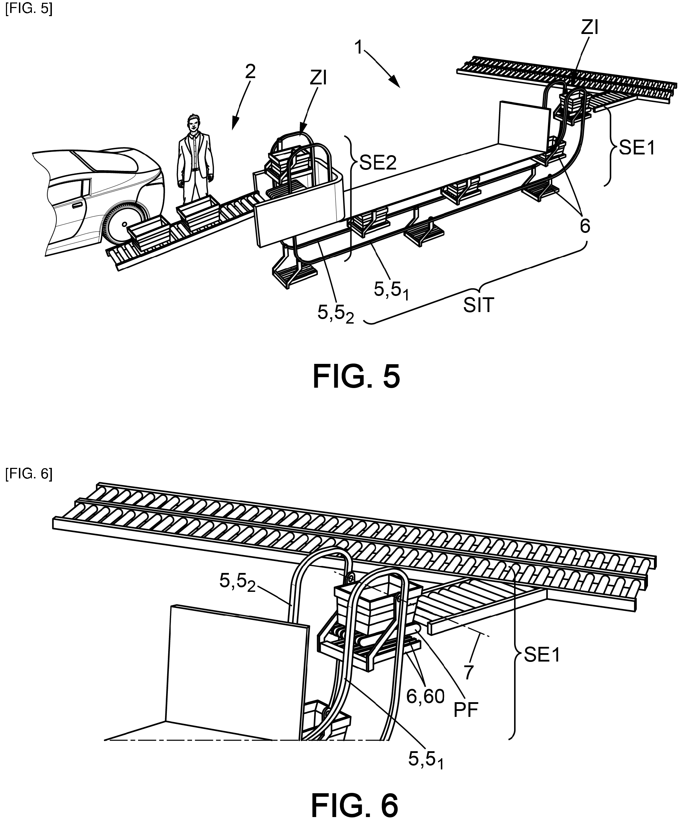

   [Fig. 5] est une vue en perspective (partielle, le bâtiment étant omis) d'un système de remise de commandes selon un deuxième mode de réalisation de la présente divulgation utilisant la gravité pour contrôler les orientations horizontales des supports d'articles le long de différentes sections de longueur du convoyeur, les supports d'articles librement articulés par rapport à la boucle de transmission via des axes de rotation sensiblement horizontaux, les supports d'articles configurés pour que le centre de gravité de l'ensemble support et unité de stockage porté par ledit support soit situé en dessous dudit de rotation, à l'aplomb de ce dernier.
**Fig. 6**
   [Fig. 6] est une vue de détail du système selon la figure 5 illustrant la première section d'extrémité à fonction de descenseur, le support d'articles présentant de manière notable un peigne dont les dents sont configurées pour traverser les dents d'un peigne fixe pour assurer le transfert d'une unité de stockage, en amont d'une zone d'inversion du sens de déplacement pour lequel le support d'articles est entrainé à la montée, avant de descendre dans la cheminée interne, après passage de la zone d'inversion.
**Fig. 7**

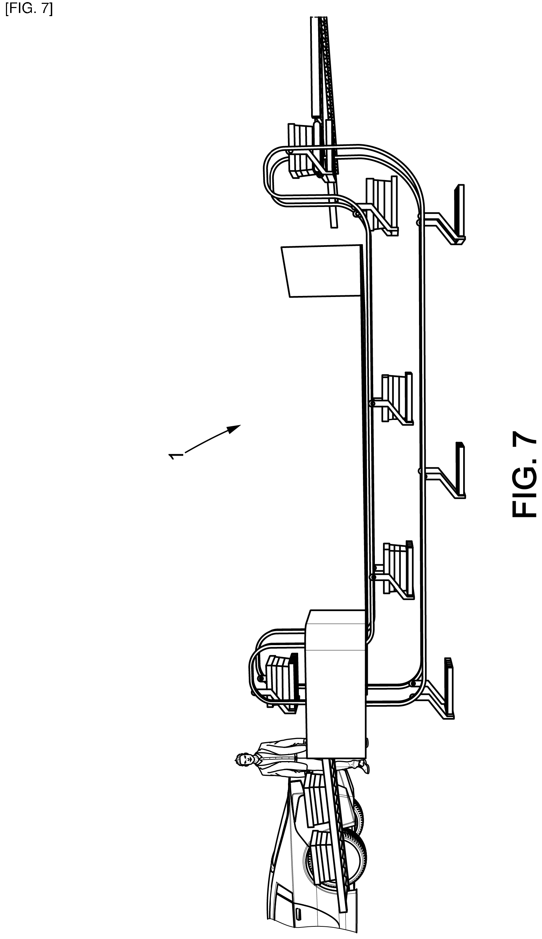

   [Fig. 7] est une vue de face du système de la figure 5.
**Fig. 8**

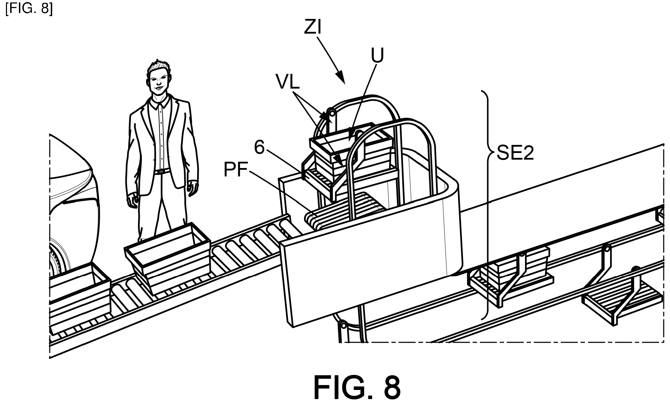

   [Fig. 8] est une vue de détail de la deuxième section d'extrémité, à fonction d'ascenseur, du convoyeur continu de la figure 5, présentant de manière notable, un peigne fixe configuré pour prélever une unité de stockage d'un support d'article, après passage d'une zone d'inversion du sens de déplacement lorsque les dents du peigne du support d'articles traversent les dents du peigne fixe à la descente.

### Description des modes de réalisation

La présente divulgation est relative à un système de remise de commandes 1 sur un emplacement de prélèvement 2, ledit emplacement de prélèvement étant situé à l'extérieur d'un bâtiment de stockage 3.

Le système de remise de commandes 1 peut être typiquement celui d'un « drive » ou service au volant à savoir un système de retrait automobile. Une ou plusieurs places de stationnement peuvent être agencées au niveau dudit emplacement de prélèvement pour permettre le stationnement de véhicules automobiles.

Les places de stationnement sont accessibles par des voies de circulation, y compris de préférence au moins une voie d'accès et une voie d'évacuation.

Le bâtiment de stockage 3 reçoit les articles des commandes, et peut comprendre des rayonnages ou autres systèmes de rangement/stockage des articles.

La préparation de commande à l'intérieur du bâtiment peut être réalisée par un ou des opérateurs collectant les articles de la commande dans le système de stockage et ses rangements. Alternativement, le bâtiment de stockage peut éventuellement recevoir un système de stockage et de prélèvement automatisés ou ASRS (pour *«Automated Storage and Retrieval System»)* automatisant le stockage et les récupérations des articles pour la préparation des commandes. L'ASRS peut comprendre à titre d'exemple, des racks, des véhicules autoguidés et au moins une station de préparation de commande, les véhicules autoguidés étant configurés pour acheminer les articles de la commande à partir des racks, jusqu'à ladite station de préparation de commande.

Les articles d'une commande peuvent être regroupés au moins pour partie dans une unité de stockage U, qui peut être un bac, un carton, ou toute autre forme d'emballage. L'unité de stockage U avec les articles de la commande peut être préparée à l'avance et être retournée dans le système de stockage de l'ASRS, permettant son stockage temporaire avant son cheminement jusqu'audit emplacement de prélèvement.

Le système de remise de commande 1 selon la présente divulgation présente un convoyeur continu 4 s'étendant depuis l'intérieur du bâtiment jusqu'au niveau dudit emplacement de prélèvement.

De manière notable ledit convoyeur continu 4 présente :
- au moins une boucle de transmission 5,
- au moins un support d'articles 6 entrainé par ladite au moins une boucle de transmission 5.

Ladite au moins une boucle de transmission 5 peut présenter une boucle unique (non illustrée), ou encore plusieurs boucles agencées en parallèle l'une par rapport à l'autre, et en particulier deux boucles consistant en une première boucle 5₁ et une deuxième boucle 5₂, et comme illustrées aux figures 1 à 8. Lorsque ladite au moins une boucle de transmission 5 présente plusieurs boucles, ledit au moins un support 6 est typiquement solidaire simultanément des différentes boucles, et en particulier des deux boucles 5₁, 5₂.

Ladite au moins une boucle 5, (et le cas échant chacun des boucles de transmission) est guidée par plusieurs poulies de guidage (ou roue dentées), au moins une des poulies étant motrice, motorisé par un moteur, typiquement un motoréducteur électrique pour assurer le déplacement de la boucle de transmission, et donc dudit au moins un support d'articles 6 solidaire de la boucle.

Ledit au moins un support d'articles 6 peut être un support d'articles 6, unique, ou de préférence présenter plusieurs supports d'articles 6 solidaires de la boucle de transmission 5, en plusieurs positions le long de ladite au moins une boucle de transmission 5. Les supports d'articles 6 peuvent être typiquement répartis régulièrement sur la longueur de ladite au moins une boucle de transmission 5.

Le support d'articles 6 (ou chaque support d'articles 6) peut être agencé latéralement à la dite au moins une boucle 5, en particulier à la première boucle 5₁ et à la deuxième boucle 5₂ solidaires des deux boucles (voir figure 1) ou le support d'articles 6 peut être agencé dans un espace intermédiaire entre les deux boucles 5₁, 5₂ (voir figure 5).

De manière générale, la boucle de transmission 5 ou chacune des boucles de transmission 5₁,5₂ peut être formée par une chaine à rouleaux, ou encore par une courroie typiquement crantée. La chaîne présentant un ensemble de maillons articulés les uns aux autres, et dans un tel cas les poulies de guidage sont des roues dentées, les dents des roues configurées pour engrener avec les rouleaux des maillons.

Le support d'article 6 présente une surface de support Ss pour les articles, et plus particulièrement pour l'unité de stockage U. De manière générale, le support d'articles 6 peut convoyer les articles regroupés dans ladite unité de stockage, ou encore le support d'article 6 peut convoyer au moins un article directement, sans emballage, ou encore dans un emballage primaire.

Le système de remise de commande 1 présente un tunnel souterrain qui s'étend depuis l'intérieur du bâtiment de stockage 3 jusqu'à l'extérieur du bâtiment au travers.

Le tunnel souterrain présente:
- une cheminée interne débouchant à l'intérieur du bâtiment au travers de laquelle s'étend une première section d'extrémité SE1 du convoyeur continu formant un descenseur qui ressort à l'intérieur du bâtiment, par une première extrémité du convoyeur formant une (première) zone d'inversion ZI du sens de déplacement
- une cheminée externe à l'extérieur du bâtiment débouchant au niveau dudit emplacement de prélèvement au travers de laquelle s'étend une deuxième section extrémité SE2 du convoyeur continu formant un ascenseur qui ressort à l'extérieur du bâtiment au niveau dudit emplacement de prélèvement 2, par une deuxième extrémité du convoyeur formant une (deuxième) zone d'inversion ZI du sens de déplacement,
- un passage souterrain, intermédiaire, s'étendant au moins suivant une composante horizontale mettant en communication la cheminée interne et la cheminée externe, au travers duquel s'étend une section intermédiaire SIT du convoyeur continu configurée pour le transport horizontal dudit au moins un support d'articles 6 depuis la première section d'extrémité SE1 à fonction de descenseur jusqu'à la seconde extrémité SE2 à fonction d'ascenseur.

Ladite au moins une boucle de transmission 5 est guidée au niveau de la (première) zone d'inversion du sens de rotation jusqu'à ladite deuxième zone d'inversion du sens de rotation par au moins deux poulies de guidage (ou au moins deux roues dentées) en formant un brin supérieur et un brin inférieur de la boucle.

Lors de l'actionnement en rotation de ladite au moins une boucle de transmission 5, ledit au moins un support d'articles 6 est entrainé par ladite au moins une boucle de transmission 5 qui opère, par exemple le long d'un brin supérieur de la boucle, suivant un premier sens de déplacement, dit aller, un déplacement depuis la première extrémité, comprenant successivement, une descente dans la cheminée interne, un déplacement horizontal au travers du passage intermédiaire du tunnel, et une montée dans la cheminée externe, et afin de permettre le convoyage d'article(s) seul(s) ou contenus dans une unité de stockage, depuis le bâtiment de stockage jusqu'audit emplacement de prélèvement.

Une fois passée la deuxième zone d'inversion ZI du sens de déplacement à la deuxième section d'extrémité SE2, ledit au moins support d'articles 6 est entrainé par la boucle de transmission 5, selon un sens de déplacement opposé, dit de retour, et opère, le long par exemple d'un brin inférieur de ladite au moins une boucle 5, un déplacement en retour comprenant une descente dans la cheminée externe, un déplacement horizontal au travers du passage intermédiaire, et une montée dans la cheminée interne, et notamment jusqu'à la première extrémité formant la première zone d'inversion du sens de déplacement ZI de la première section d'extrémité SE1.

Le convoyeur continu présente un mécanisme de contrôle de l'orientation dudit au moins un support par rapport à ladite au moins boucle transmission 5, comprenant un axe de rotation 7 entre ledit au moins support d'articles 6 et la boucle de transmission 5, le mécanisme configuré pour maintenir une surface de support selon une orientation horizontale ,et en particulier quel que soit la position du support d'articles 6 entrainé par la boucle de transmission 5 le long des différentes sections du convoyeur, (à savoir la première section d'extrémité SE1, la section intermédiaire SIT ou la deuxième section d'extrémité SE2), au moins suivant le sens aller, voire suivant le sens retour. L'axe de rotation 7 peut être typiquement orienté suivant une direction horizontale, transversalement à ladite au moins une boucle de transmission 5.

Dans la présente divulgation, et de manière générale, on entend par «*horizontale*» une direction horizontale ou proche de l'horizontale à + ou - 10°, et on entend par «*verticale*» une direction verticale ou proche de la verticale à + ou - 10°.

Suivant la mode de réalisation, notamment illustré aux figures 1 à 4, le brin inférieur peut être rapproché du brin inférieur de ladite boucle de sorte à les juxtaposer l'un à l'autre au niveau de la section intermédiaire SIT du convoyeur.

On limite ainsi l'encombrement vertical du convoyeur, et donc la dimension en hauteur du passage intermédiaire du tunnel. Lorsque le support d'article 6 est d'encombrement sensiblement plan, notamment formé par un peigne, l'axe de rotation 7 peut de manière générale être agencé passant par le plan du support d'articles. Le mécanisme de contrôle de l'orientation du support permet alors de positionner ledit support d'articles dans l'orientation horizontale, de moindre encombrement, sans que le support d'article n'augmente l'encombrement vertical du convoyeur continu.

Dans une telle configuration avantageuse d'encombrement vertical limité, seul le brin supérieur est configuré pour convoyer les unités de stockage U tels que des conteneurs, le rapprochement entre le brin supérieur et le brin inférieur, écartés l'un de l'autre suivant une distance limitée (à savoir inférieure à la dimension en hauteur de l'unité de stockage), interdisant le convoyage de l'unité de stockage par le brin inférieur, et comme compréhensible de la figure 1.

Selon un autre mode de réalisation, le brin supérieur et le brin inférieur de la boucle de transmission 5 peuvent être écartés pour permettre, au moins dans un deuxième mode de fonctionnement, le convoyage des supports d'article dans le sens retour, comme par exemple illustré sur le mode de réalisation des figures 5 et suivantes.

Éventuellement et selon un autre mode de réalisation (non illustré), le brin inférieur de la boucle peut entrainer ledit au moins un support d'article, dans un sens retour, voire un sens aller.

Les poulies de guidage (ou notamment roues dentées), à fonction de guidage et de renvoi d'angle sont agencées :
- au niveau des zones d'inversion ZI du sens de déplacement aux extrémités du convoyeur sur la première section d'extrémité SE1 et la deuxième section d'extrémité SE2, mais encore
- au niveau de la zone de transition entre la première section d'extrémité SE1 et la section intermédiaire SIT du convoyeur continu, et en particulier une ou plusieurs poulies pour le guidage du brin supérieur de la boucle et une ou plusieurs poulies de guidage prévues pour le guidage du brin inférieur de la boucle de transmission, et encore
- au niveau de la zone de transition entre la section intermédiaire SIT et la deuxième section d'extrémité SE2 et en particulier une ou plusieurs poulies pour le guidage du brin supérieur de la boucle et une ou plusieurs poulies de guidage prévues pour le guidage du brin inférieur de la boucle de transmission.

Selon un mode de réalisation, le mécanisme de contrôle de l'orientation dudit au moins un support par rapport à ladite au moins une boucle transmission présente
- un système de cames Ca présentant plusieurs cames s'étendant le long des différentes sections du convoyeur continu consistant en la première section extrémité SE1, la section intermédiaire SIT et la deuxième section d'extrémité SE2 du convoyeur continu,
- un système de suiveur de cames sCa appartenant audit au moins un support d'articles 6 configuré pour engager avec lesdites cames Ca lors du cheminement dudit au moins un support d'articles le long des différentes sections du convoyeur continu consistant en la première section d'extrémité SE1, la section intermédiaire SIT et la deuxième section d'extrémité SE2.

Un tel mode de réalisation du mécanisme présentant des cames fixes le long des différentes sections du convoyeur et des suiveurs de came est illustré à titre d'exemple non limitatif des figures 1 à 4.

Le système de suiveurs de cames sCa peut présenter :
a) une première paire de roues de guidage R1, R2, orientées suivant une première direction horizontale à savoir qu'un axe virtuel passant par les axes de rotation des deux roues est orienté suivant une direction horizontale et
b) une deuxième paire de roues de guidage R3, R4 orientées suivant une direction verticale, à savoir qu'un axe virtuel passant par les axes de rotation des deux roues est orienté suivant une direction verticale.

Le système de came Ca présente :
c) des premiers guides G1 présentant des guides horizontaux G1H rectilignes s'étendant en longueur le long de la section intermédiaire SIT du convoyeur continu 4, les guides horizontaux G1H configurés pour coopérer simultanément avec les roues de guidage R1, R2 de la première paire pour assurer l'orientation horizontale dudit au moins un support d'articles lors de son cheminement au travers de la section intermédiaire SIT du convoyeur continu
d) des deuxièmes guides G2 présentant des guides verticaux G2V rectilignes s'étendant en longueur suivant la hauteur le long de la première section d'extrémité et le long de la deuxième section d'extrémité configurés pour coopérer simultanément avec les roues de la deuxième paire de roue de guidage pour assurer l'orientation horizontale dudit au moins un support d'articles lors de son cheminement à la descente dans la cheminée interne, et de son cheminement à la montée dans la cheminée externe.

De manière notable les premiers guides G1 et/ou les deuxièmes guides G2 peuvent présenter des guides incurvés GIC agencés au niveau des zones de transition de ladite au moins une boucle transmission 5 entre :
- la première section d'extrémité SE1 formant le descenseur, d'une part, et la section intermédiaire SIT du convoyeur continu, et
- la section intermédiaire SIT dudit convoyeur continu, d'une part, et la deuxième section d'extrémité SE2 formant ledit ascenseur.

Les guides incurvés GIC sont configurés pour assurer une transition du guidage entre :
- une première configuration par la coopération de la première paire de roues de guidage R1, R2 et les premiers guides G1 lors du cheminement horizontal dudit au moins support
- une deuxième configuration par la coopération de la deuxième paire de roues de guidage R3, R4 et les deuxièmes guides G2 lors du cheminement vertical dudit au moins un support d'articles 6.

Comme visible aux figures 1 à 4, les cames peuvent encore présenter des guides incurvés GIC (appartenant aux premiers guides G1 et / ou au deuxièmes guides G2) au niveau de la zone d'inversion ZI du sens de déplacement de la première section d'extrémité SE1 et de la deuxième section d'extrémité SE2 pour assurer une transition du guidage entre :
- une première configuration par la coopération de la deuxième paire de roues de guidage R3, R4 et le deuxième guide G2 lors du cheminement vertical dudit au moins support (sens aller)
- une deuxième configuration par la coopération de la première paire de roues de guidage R1, R2 et le premier guide G1 lors du cheminement dudit au moins un support d'articles 6 suivant au moins une composant horizontale,
- une troisième configuration par la coopération de la deuxième paire de roues de guidage R3, R4 et le deuxième guide G2 lors du cheminement vertical dudit au moins support (sens retour).

Selon un mode de réalisation illustré à titre d'exemple non limitatif aux figures 5 à 8, le mécanisme de contrôle de l'orientation du support d'article par rapport à ladite au moins une boucle de transmission 5 utilise principalement ou uniquement la gravité pour assurer l'orientation dudit support d'articles 6.

Le support d'articles 6 présentant la surface de support d'articles pour une unité de stockage U, ladite surface de support étant agencée en dessous du niveau de l'axe de rotation 7, la portion du support formant la surface de support étant reliée à l'axe de rotation par l'intermédiaire d'au moins une liaison à composante verticale LV dudit support. Selon un mode de réalisation illustré à titre d'exemple à la figure 5, le support d'article peut comprendre une première liaison verticale et une deuxième liaison verticale, reliant chacune la surface de support au dit axe d'articulation 7, de part et d'autre de la surface de supports, la première liaison verticale articulée à la première boucle 5₁ et la deuxième liaison verticale articulée à la deuxième boucle 5₂.

L'unité de stockage U est en appui sur la surface de support peut être intercalé entre la première liaison verticale et la deuxième liaison verticale.

L'ensemble support d'articles 6 et unité de stockage U (en particulier rempli des articles) en appui sur le support est configuré pour présenter un centre de gravité agencé sous le niveau de l'axe de rotation 7, sensiblement à l'aplomb de ce dernier, le mécanisme de contrôle dudit au moins un support par rapport à la boucle transmission configuré pour maintenir la surface de support à l'horizontale par l'action de la gravité sur ledit ensemble support d'articles et unité de stockage. Dans un tel mode de réalisation, la position de l'axe de rotation 7 par rapport à la surface de support est déterminée pour équilibrer le support d'articles 6 en maintenant l'horizontalité de la surface de support : la projection de l'axe de rotation 7 suivant une direction perpendiculaire à la surface de support peut venir intersecter la surface de support sensiblement en son milieu. La hauteur de l'unité de stockage est de préférence inférieure à la distance séparant l'axe de rotation 7 et la surface de support du support d'articles 6, qui est formée par un peigne selon le mode de réalisation des figures 5 à 8.

De manière générale, le système de remise de commandes peut présenter la voie de circulation automobile, en communication avec la ou les places de stationnement, qui peut être une voie d'accès au(x) place(s) de stationnement, ou une voie d'évacuation, le convoyeur continu passant en souterrain sous ladite voie de circulation.

Selon un mode de réalisation, ledit au moins un support d'articles 6 peut être un peigne présentant plusieurs dents 60 parallèles en elles et le système de remise de commande peut comprendre au moins un système de transfert présentant au moins un peigne fixe, associé à la première section d'extrémité SE1 et/ou à la deuxième section d'extrémité SE2.

La première section d'extrémité SE1 présentant la (première) zone d'inversion ZI du sens de déplacement avant laquelle le support d'articles est entrainé à la montée, le système de transfert associé à cette extrémité présente un (premier) peigne fixe PF),
Le support d'articles 6 est configuré pour prélever les articles sur le peigne fixe PF lorsque les dents du support d'articles traversent les dents du peigne fixe, lors sa montée avant le passage de la première zone d'inversion ZI, et comme illustré selon le sens de la flèche à la figure 6. Le peigne fixe peut être alimenté en unité de stockage par un ou plusieurs convoyeurs en prolongement tel que par exemple des convoyeurs à rouleaux.

La deuxième section d'extrémité SE2 présente la (deuxième) zone d'inversion ZI du sens de déplacement après laquelle ledit au moins un support d'articles 6 est entrainé à la descente. Le système de transfert associé à cette deuxième extrémité comprend un (deuxième) peigne fixe PF. Le support d'articles 6 est configuré pour déposer les articles sur le peigne fixe lorsque les dents du support d'articles traversent les dents du peigne fixe, lors sa descente après passage de la zone d'inversion ZI, et comme par exemple illustré à la figure 8.

Le peigne fixe peut être prolongé par un convoyeur, par exemple à rouleaux, notamment à fonction d'accumulation ;
De manière générale, les peignes fixes PF peut comprend pour chaque dent ou au moins une partie des dents, une bande convoyeuse continue motorisée. Les bandes convoyeuses des différentes dents peuvent être entrainées simultanément pour faciliter le chargement du premier peigne fixe, avec une unité de stockage U à partir du convoyeur en prolongement, ou encore de faciliter l'évacuation de l'unité de stockage en appui sur le deuxième peigne jusqu'au convoyeur en prolongement à fonction d'accumulation.

La présente divulgation est encore relative à un procédé de remise de commande mettant en oeuvre un système de remise de commande selon la présente divulgation comprenant :
- préparer une commande d'articles dans le bâtiment de stockage et disposer les articles dans une ou plusieurs unités de stockage,
- déposer la ou les unités de stockage sur ledit au moins un support d'articles 6, et transférer le ou lesdites unités de stockage, depuis le bâtiment de stockage 3 jusqu'audit emplacement de prélèvement 2 extérieur, par le convoyage dudit au moins un support d'articles 6 entrainé par la boucle de transmission 5 qui opère successivement une descente dans la cheminée interne, un déplacement horizontal au travers du passage intermédiaire du tunnel et une montée dans la cheminée externe.

Le procédé peut prévoir, lorsque la première extrémité comprend le (premier) système de transfert présentant le peigne fixe PF, préalablement à l'inversion du sens de déplacement du support d'articles et à la descente du support d'articles 6, la montée du support d'articles 6 qui prélève l'unité de stockage en appui sur le peigne fixe lorsque les dents du peigne de la surface de support traversent les dents du peigne fixe PF.

Le procédé peut prévoir que le premier peigne fixe est alimenté en ladite unité de stockage par un convoyeur motorisé en prolongement du peigne fixe.

Le procédé peut prévoir, lorsque la deuxième extrémité comprend le (deuxième) système de transfert présentant le peigne fixe, successivement à la montée du support d'articles 6, l'inversion du sens de déplacement du support d'articles qui descend et dépose l'unité de stockage lorsque les dents du peigne de la surface de support traversent les dents du peigne fixe PF.

Le procédé peut prévoir que le deuxième peigne fixe évacue ladite unité de stockage sur un convoyeur en prolongement qui peut être le convoyeur à accumulation.

Lorsque le bâtiment de stockage présente un système de stockage et de prélèvement automatisés ou ASRS automatisant le stockage et les récupérations des articles pour la préparation des commandes, présentant en particulier, des racks, des véhicules autoguidés et au moins une station de préparation de commande, la commande peut être assemblée à la station de commande en regroupant tout ou partie des articles de la commande dans une ou plusieurs unités de stockage U. La ou les unités de stockage ainsi préparées peuvent être acheminées automatiquement typiquement par un convoyeur à rouleaux jusqu'au convoyeur continu 4, ou encore par l'un ou des véhicules autoguidés de l'ASRS, et donc sans intervention humaine pour le transport.

### Nomenclature

- 1. Système de remise de commande,
- 2. Emplacement de prélèvement,
- 3. Bâtiment de stockage,
- 4. Convoyeur continu,
- 5. Au moins une boucle de transmission,
- 5₁, 5₂. Première et deuxième boucle,
- 6 au moins un support d'articles,
- 60. Dents (support d'articles)
- 7 Axe de rotation
- SE1. Première section d'extrémité (convoyeur continu),
- SE2. Deuxième section d'extrémité (convoyeur continu),
- SIT. Section intermédiaire,
- Ca, sCa. Système de cames, et système suiveur de cames,
- R1, R2. Roues de guidage de la première paire de roues (horizontale)µ
- R3, R4. Roue de guidage de la deuxième paire de roues (verticale)
- G1, G1H. Premiers guides, et guides horizontaux
- G2, G2V. Deuxièmes guides et guides verticaux,
- GIV. Guides incurvés,
- PF. Peignes fixes,
- ZI. Zone d'inversion du sens de déplacement

## Revendications

1. Installation de service au volant, ou drive, présentant :
- un bâtiment de stockage à l'intérieur duquel sont stockés des articles,
- une pluralité de places de stationnement agencées au niveau d'un emplacement de prélèvement (2). à l'extérieur du bâtiment de stockage
- une voie de circulation automobile, en communication avec les places de stationnement, la voie étant agencée intermédiaire entre le bâtiment de stockage et ledit emplacement de prélèvement,
- une pluralité d'unités de stockage (U), tels que bacs ou cartons,
- un système de remise de commandes (1) sur ledit emplacement de prélèvement (2) situé à l'extérieur du bâtiment de stockage (3) comprenant un convoyeur continu (4) s'étendant depuis l'intérieur du bâtiment jusqu'au niveau dudit emplacement de prélèvement en passant en souterrain sous ladite voie de circulation,
ledit convoyeur continu (4) présentant:
- au moins une boucle de transmission (5),
- une pluralité de support d'articles (6) solidaires de ladite au moins une boucle de transmission (5), en plusieurs positions le long de ladite au moins une boucle de transmission (5), entrainés par ladite au moins un boucle de transmission (5), les supports d'articles présentant chacun une surface de support (Ss) sur laquelle peut être déposée l'une des unités de stockage (U), la surface de support (Sv) configurée pour le support d'une unité de stockage (U),
et dans lequel un tunnel souterrain s'étend depuis l'intérieur du bâtiment de stockage (3) jusqu'à l'extérieur du bâtiment au travers présentant :
- une cheminée interne débouchant à l'intérieur du bâtiment au travers de laquelle s'étend une première section d'extrémité (SE1) du convoyeur continu formant un descenseur qui ressort à l'intérieur du bâtiment,
- une cheminée externe à l'extérieur du bâtiment débouchant au niveau dudit emplacement de prélèvement au travers de laquelle s'étend une deuxième section extrémité (SE2) du convoyeur continu formant un ascenseur qui ressort à l'extérieur du bâtiment au niveau dudit emplacement de prélèvement (2),
- un passage souterrain, intermédiaire, s'étendant au moins suivant une composante horizontale mettant en communication la cheminée interne et la cheminée externe, au travers duquel s'étend une section intermédiaire (SIT) du convoyeur continu configuré pour le transport horizontal desdits supports d'articles depuis le descenseur jusqu'audit ascenseur
et dans lequel le convoyeur continu présente un mécanisme de contrôle de l'orientation desdits supports d'articles (6) par rapport à ladite au moins une boucle transmission (5), comprenant, pour chaque support d'articles (6), un axe de rotation (7) entre ledit au moins support d'articles (6) et la boucle de transmission (5), configuré pour maintenir la surface de support selon une orientation horizontale

2. Installation selon la revendication 1 dans laquelle le mécanisme de contrôle desdits supports d'articles (6) par rapport à ladite au moins boucle transmission présente
- un système de cames (Ca) présentant plusieurs cames s'étendant le long des différentes sections du convoyeur continu consistant en la première section extrémité, la section intermédiaire et la deuxième section d'extrémité du convoyeur continu,
- un système de suiveur de cames (sCa) appartenant auxdits supports articles (6) configuré pour engager avec lesdites cames (Ca) lors du cheminement des supports d'articles le long des différentes sections du convoyeur continu consistant en la première d'extrémité, la section intermédiaire et la deuxième section d'extrémité.

3. Installation selon la revendication 2 dans laquelle :
- le système de suiveurs de cames (sCa) présentant :
a) une première paire de roues de guidage (R1,R2), orientées suivant une première direction horizontale et
b) une deuxième paire de roues de guidage (R3, R4) orientées suivant une direction verticale
- le système de came (Ca) présentant :
c) des premiers guides (G1) présentant des guides horizontaux (G1H) rectilignes s'étendant en longueur le long de la section intermédiaire (SIT) du convoyeur continu, les guides horizontaux configurés pour coopérer avec les roues de guidage de la première paire pour assurer l'orientation horizontale desdits supports d'articles lors de leur cheminement au travers de la section intermédiaire du convoyeur continu
d) des deuxièmes guides (G2) présentant des guides verticaux (G2V) rectilignes s'étendant en longueur suivant la hauteur le long de la première section d'extrémité et le long de la deuxième section d'extrémité configurés pour coopérer avec les roues de la deuxième paire pour assurer l'orientation horizontale desdits supports d'articles lors de leur cheminement à la descente dans la cheminée interne, et de son cheminement à la montée dans la cheminée externe.

4. Installation selon la revendication 3 dans laquelle les premiers guides (G1) et/ou les deuxième guides (G2) présentant des guides incurvés (GIC) agencés au niveau des zones de transition de ladite au moins une boucle transmission (5) entre :
- la première section d'extrémité (SE1) formant le descenseur, d'une part, et la section intermédiaire (SIT) du convoyeur continu,
- la section intermédiaire (SIT) dudit convoyeur continu, d'une part, et la deuxième section d'extrémité (SE2) formant ledit ascenseur,
les guides incurvées (GIC) configurés pour assurer une transition du guidage entre:
- une première configuration par la coopération de le première paire de roues de guidage (R1, R2) et les premiers guides (G1) lors du cheminement horizontal desdits supports d'articles
- une deuxième configuration par la coopération de la deuxième paire de roues de guidage (R3, R4) et les deuxièmes guides (G2) lors du cheminement vertical desdits supports d'articles (6).

5. Installation selon la revendication 1, les supports d'articles (6) présentant une surface de support d'articles pour une unité de stockage (U), ladite surface de support agencée en dessous du niveau de l'axe de rotation (7), la portion du support formant la surface de support reliée à l'axe de rotation par l'intermédiaire d'au moins une liaison à composante verticale (LV) dudit support, l'ensemble support d'article et unité de stockage en appui sur le support présentant un centre de gravité agencé sous le niveau de l'axe de rotation (7), à l'aplomb de ce dernier, le mécanisme de contrôle dudit au moins un support par rapport à la boucle transmission configuré pour maintenir la surface de support à l'horizontale par l'action de la gravité sur ledit ensemble support d'articles et unité de stockage.

6. Installation selon l'une des revendications 1 à 5, dans laquelle chaque support (6) est un peigne présentant plusieurs dents (60) parallèles en elles, et dans laquelle :
- la première section d'extrémité (SE1) présente une zone d'inversion (ZI) du sens de déplacement avant laquelle le support d'articles est entrainé à la montée,
un système de transfert comprenant un peigne fixe (PF) ,
et dans lequel le support d'articles (6) est configuré pour prélever les articles sur le peigne fixe lorsque les dents du support d'articles traversent les dents du peigne fixe, lors sa montée avant le passage de la zone d'inversion.
et/ou
- la deuxième section d'extrémité (SE2) présente une zone d'inversion (ZI) du sens de déplacement après laquelle le support d'articles est entrainé à la descente,
un système de transfert comprenant une peigne fixe (PF)
et dans lequel le support d'articles est configuré pour déposer les articles sur le peigne fixe lorsque les dents du support d'articles traversent les dents du peignes fixe, lors sa descente après passage de la zone d'inversion (ZI).

7. Installation selon l'une des revendications 1 à 6, dans laquelle ladite au moins une boucle de transmission (5) comprend une première boucle (5₁) et une deuxième boucle (5₂), parallèles et synchronisées.

8. Procédé de remise de commande mettant en œuvre une installation selon l'une des revendications 1 à 7 comprenant :
- préparer une commande d'articles dans le bâtiment de stockage et disposer les articles dans une ou plusieurs des unités de stockage (U),
- déposer le ou les unités de stockage (U) sur l'un ou plusieurs des supports d'articles (6), et transférer le ou lesdites unités de stockage (U), depuis le bâtiment de stockage (3) jusqu'audit emplacement de prélèvement (2) extérieur, par le convoyage dudit au moins un support d'articles (6) entrainé par la boucle de transmission (5) qui opère successivement une descente dans la cheminée interne, un déplacement horizontal au travers du passage intermédiaire du tunnel et une montée dans la cheminée externe.
